# EUROPEAN PATENT SPECIFICATION

(11) **EP 3 569 112 B1**
(45) Date of publication and mention of the grant of the patent: **17.03.2021**
(21) Application number: 19174977.9
(22) Date of filing: 16.05.2019
(51) Int. Cl.: B29C 65/02, B29C 65/36, B65D 1/26, A47G 19/22, B29C 65/00, B32B 27/10, B65D 51/20, B65D 51/16

(54) **A SEALED CONTAINER FOR BEVERAGES**
VERSIEGELTER BEHÄLTER FÜR GETRÄNKE
RÉCIPIENT HERMÉTIQUE POUR BOISSONS

(30) Priority: 18.05.2018 GB 201808094; 07.03.2019 GB 201903043
(43) Date of publication of application: 20.11.2019
(73) Proprietor: Coates, Ken, A63 VW14 Delgany, Co. Wicklow (IE); Orsborn, Brian, A63 VW14 Delgany, Co. Wicklow (IE)
(72) Inventor: Coates, Ken, A63 VW14 Delgany, Co. Wicklow (IE); Orsborn, Brian, A63 VW14 Delgany, Co. Wicklow (IE)
(74) Representative: Purdylucey Intellectual Property

(56) References cited:
- EP-A1- 0 896 930
- WO-A1-2010/135613
- WO-A1-2012/042188
- JP-A- 2004 026 211
- US-A- 3 501 896
- US-A1- 2007 294 983
- US-A1- 2008 023 348
- US-A1- 2015 274 367

## Description

### Field of the Invention

The present invention relates to sealed containers for pressurised beverages, a kit for assembling a sealed container containing a pressurised beverage as well as a method of providing a sealed container containing a beverage.

### Background to the Invention

Most fast-food outlets sell carbonated beverages in paper cups with plastic friction-fit lids having an aperture for receipt of a straw. As the drinks are generally consumed in the store, or carried out by a user, the current cups and lids do not have to be leak proof and/or tamper evident. More recently, the large fast-food outlets are providing a home delivery services, which involves meals being specially packaged and delivered to a consumer's home. The transport of the beverages presents a challenge, as the drinks are subjected to a considerable amount of movement when they are transported, which is particularly problematical in the case of carbonated drinks which are pressurised and evolve carbon dioxide when disturbed, shaken and exposed to heat. The use of conventional friction-fit lids is unsuitable as the seal is insufficient to maintain pressure in the cup, meaning that the beverage goes "flat", and the friction-fit lids detach easily making them entirely unsuitable as a home-delivery solution. Currently, PET bottles with a screw-cap are employed for home delivery of carbonated beverages. The problem with PET bottles is that they are more expensive than in-store cup options, they require refrigeration, they require a lot more storage space, and the introduces a lot of plastic material into the environment.

EP 0 896 930 describes a sealed container having a sealing foil and a cap on top of the container while US 2015/274367 and WO 2010/135613 disclose containers manufactured from paperboard.

It is an object of the invention to overcome at least one of the above-referenced problems.

### Summary of the Invention

According to a first aspect of the present invention, there is provided a kit for assembling a sealed container containing a beverage, the kit comprising:
a cup with an open top and a lip circumscribing the open top;
a sealing lid dimensioned to be welded to the lip of the cup continuously around the lip to seal the cup; a removable transport cap for sealing engagement with the top of the cup configured to define
a headspace chamber between the sealing lid and the transport cap for receipt and retainment of excess fluid exiting the cup and a welding machine comprising a welding head configured for sealing the paperboard cap to the lip of the cup,
characterised in that the beverage is a pressurised beverage, the cup is a paperboard cup and the sealing lid is a paperboard sealing lid including a pressure release aperture wherein in use a beverage can be dispensed into the cup, and the welding machine can be actuated whereby the welding head can weld the paperboard sealing lid to the lip of the cup continuously around the lip to provide the sealed container containing the beverage.

According to another aspect of the present invention, there is provided a sealed container containing a beverage, the sealed container comprising:
a cup with an open top and a lip circumscribing the open top;
a beverage disposed within the cup;
a sealing lid welded to the lip of the cup continuously around the lip to seal the cup, and a removable transport cap for sealing engagement with the top of the cup configured to define a headspace chamber between the sealing lid and the transport cap for receipt and retainment of excess fluid exiting the cup characterised in that the beverage is a pressurised beverage, the cup (2) is a paperboard cup (2) and the sealing lid (5) is a paperboard sealing lid (5) including a pressure release aperture (6).

The pressure release aperture provides limited fluid communication through the lid. In one embodiment, the pressure release aperture has an area of about 0.1 mm² to about 10 mm². Optionally, the pressure release aperture is a micron-sized pressure release aperture. Suitably, the micron-sized pressure release aperture has an area of about 0.05 mm² to about 0.8 mm².

Suitably, the pressure release aperture is positioned about the centre of the sealing lid.

In one embodiment, the paperboard cup and paperboard sealing lid are formed of the same paperboard material. Preferably, the paperboard material is a paperboard-polyethylene laminate.

In one embodiment, the transport cap comprises a top panel having a raised central portion and the headspace chamber is defined between the sealing lid and the raised central portion.

Preferably, the top panel includes a first annular sealing head configured to abut the paperboard sealing lid when the transport cap is engaged on the top of the cup to peripherally define the headspace chamber.

In a preferred embodiment, the top panel includes a second annular sealing head at the periphery of the top panel.

Preferably, the top panel of the transport cap comprises a raised annular channel defined by the first annular sealing head and the peripheral annular sealing head. Optionally, the top panel of the transport cap comprises an opening, or means for providing an opening, for receipt of a drinking straw.

In one embodiment, the welding machine is a heat-welding machine.

Suitably, the paperboard lid comprises only one pressure release aperture.

The cup and sealing lid comprise paperboard, for example a paperboard laminate material (i.e. a laminate of paperboard and at least one of a polymer or foil layer).

The problems of the prior art are addressed by the provision of paperboard cups for carbonated beverages that are sealed using paperboard lids that are heat welded to the cup. The use of a paperboard lid with a paperboard cup provides for a seal that has been shown to withstand the high pressures that carbonated beverages generate without compromising the integrity of the seal. The kit and container of the invention are especially applicable for use with "ready to consume" and "short shelf-life drinks" such as carbonated beverages sold in fast-food outlets which are pressurised and tends to lose their fizziness rapidly over time. In addition, the Applicant has discovered that the provision of a small aperture in the cap allows venting of a sufficient volume of carbon dioxide to prevent the seal rupturing during transport, without risk of losing significant amounts of beverage or contaminating other food items being delivered at the same time. The micron-sized aperture has also been found to allow the lid be pierced with a plastic drinking straw, as the area of the lid around the micron-sized has been found to become weakened during transport due to beverage wetting the area of the lid around the aperture. Also provided is an outer transport cap comprising an annular sealing head configured to abut the sealing lid when the outer transport cap is engaged with the cup, which serves to retain any beverage that may have leaked through the micron-sized aperture under extreme agitation / disturbance at the centre of the lid and away from the periphery where it is prone to leakage. The paperboard sealing lid creates an airtight seal on the container body which creates a pressurised area between the beverage and the sealing lid inside the vessel/container that holds the liquid in place to prevent leakage out through the micron-sized aperture.

The sealing lid also functions as a tamper evident seal, which serves to provide comfort to the consumer that the drink they are about to consume has not been tampered with or adulterated in any way. Also, the paperboard nature of the sealing lid allows material to be printed on the lid that is visible by the consumer, for example branding, product information, or marketing information or advertising.

In one embodiment, the micron-sized pressure release aperture has an area of about 0.05 to 0.8 mm². In one embodiment, the micron-sized pressure release aperture has an area of about 0.1 to 0.6 mm². In one embodiment, the micron-sized pressure release aperture has an area of about 0.2 to 0.4 mm². In one embodiment, the micron-sized pressure release aperture has an area of about 0.3 mm².

In one embodiment, the pressure release aperture is positioned at or about the centre of the sealing lid. This is intended to remove any alignment issues when a straw is used to pierce the sealing lid by passing the straw through the aperture in the transport cap. If it was anywhere else on the sealing lid then the sealing cap would have to be specifically aligned to get the straw through the cap in the correct location to hit the aperture on the sealing lid. In one embodiment, the sealing lid comprises a plurality of micron-sized apertures, for example ten, eight, six, four or three. In one embodiment, the sealing lid may comprise only one or two micron-sized apertures.

In one embodiment, the paperboard cup and paperboard sealing lid are formed of the same material.

In one embodiment, the paperboard cup and paperboard sealing lid are formed of a paperboard-polymer laminate. Use of paperboard polymer laminates is preferred, as it has been shown to provide a very secure seal. Laminates of paperboard and other materials may also be employed, for example paperboard-metallic film laminates.

In one embodiment, the paperboard cup and paperboard sealing lid are formed of a paperboard-polyethylene laminate. Other paperboard-polymer may be employed as described below.

In a preferred embodiment, the paperboard sealing lid is heat welded to the lip of the cup. In this embodiment, both the cup and lid will generally include a polymer layer which bond together during heat welding. Heat welding machines are of a suitable size for use in fast-food outlets, and therefore paperboard-polymer cups and sealing lids that can be heat-welded are most suitable for the present invention.

In an embodiment in which the cup and sealing lid comprise a paperboard-metallic film laminate, induction welding may be employed to seal the sealing lid to the cup. Induction welding is described in the literature, for example Davies et al (Induction Heating Handbook, McGraw-Hill, ISBN 0-07-084515-8).

In one embodiment, the cup has a double wall. This facilitates keeping the carbonated beverage cool, which reduces the rate of pressure increase in the cup during transport, and thereby reduces the pressure on the seal.

In one embodiment, the cup and/or sealing lid are each, independently, formed from a biodegradable or compostable material. Examples of biodegradable and compostable paperboard laminate material include bioactive thermoplastic Poly(lactic acid) / polylactic acid / polylactide (PLA).

In one embodiment, the container or kit comprises a removable transport cap configured for friction-fit engagement with the top of the cup on the sealing lid, the transport cap having a top panel and a skirt circumscribing the top panel, in which the top panel includes a first annular sealing head configured to abut the paperboard lid when the transport cap is engaged on the top of the cup. The annular sealing head provides an annular seal between the paperboard sealing lid and transport cap that retains leaked beverage, typically at the centre of the lid away from the periphery.

In one embodiment, the top panel comprises a raised central portion defined by the first annular sealing head configured to provide headspace between the sealing lid and the transport cap that is in fluid communication with the micron-sized aperture. In one embodiment, the raised central portion is generally convex.

In one embodiment, the top portion of the transport cap comprises a peripheral annular sealing head configured to abut a periphery of the paperboard sealing lid when the transport cap is engaged on the top of the cup. The provision of a second (peripheral) sealing head provides a second barrier to beverage leaking out the side of the transport cap.

In one embodiment, the transport cap is formed from a polymer material, for example polyethylene terephthalate (PET). Other materials include polylactide (PLA), High Impact Polystyrene (HIPS), Polypropylene (PP).

In one embodiment, the top portion of the transport cap comprises a raised annular portion defined by the first annular sealing head and the peripheral annular sealing head. This provides a retaining space for beverage that has leaked out of the micron-sized aperture and past the first annular sealing head.

In one embodiment, the top panel of the transport cap comprises an opening for receipt of a drinking straw, or means for making an aperture (for example crossed-slits, or a frangible or weakened portion of the lid).

In one embodiment, the paperboard sealing lid comprises a tab portion that extends beyond the lip of the cup for use in removal of the sealing lid from the cup. In other embodiments, the container is not configured for removal of the sealing lid, and in this embodiment, the user is generally directed to pierce a hole in the sealing lid with a straw or the like. The Applicant has discovered that the use of a micron-sized pressure release aperture at the centre of the lid provides an area of the lid that is weakened due to coming into contact with beverage, and therefore suitable for rupturing with a straw.

In one embodiment, the paperboard sealing lid comprises a frangible or weakened portion, or aperture, configured for receipt of a drinking spout. This is particularly useful when the beverage is a hot drink, such as coffee or tea, where a drinking straw is not suitable.

In one embodiment, the skirt comprises formations configured to friction-fit over the lip of the cup, to secure the transport cap to the cup. In one embodiment, the formations are spaced apart fluting formations that circumscribe the skirt of the lid. Such formations and friction-fit configurations are well known in the art, for example from US3583596.

In one embodiment, the container comprises a pressurised beverage, for example a carbonated beverage. Examples include sparkling water, cola, orange, lemon and lime, lemonade, beer, tonic water, cider, and sparkling wine. The container of the invention may also be employed for other beverages that generate gas.

The container, or kit, may include a drinking spout configured to penetrate the sealing lid for the purpose of drinking the beverage.

In an example not according to the invention the disclosure describes a transport cap for a sealed beverage container of the type having an open top, a lip circumscribing the open top, and a sealing lid welded to the lip, the transport cap having a top panel and a skirt circumscribing the top panel, in which the top panel includes a first annular sealing head configured to abut the sealing lid when the transport cap is engaged on the top of the cup.

In one example the top panel comprises a raised central portion defined by the first annular sealing head configured to provide a chamber for receipt of fluid exiting the cup.

In one example the top portion of the transport cap comprises a peripheral annular sealing head configured to abut a periphery of the sealing lid when the transport cap is engaged on the top of the cup.

In one example, the top portion of the transport cap comprises a raised annular portion defined by the first annular sealing head and the peripheral annular sealing head.

In one example, the top panel of the transport cap-comprises an opening for receipt of a drinking straw, or means for making an aperture (for example crossed-slits, or a frangible or weakened portion of the lid).

In an example not according to the invention the disclosure describes a method of preparing a beverage suitable for the ready-to-drink market including home delivery comprising the steps of:
dispensing a beverage into a paperboard cup with an open top and a lip circumscribing the open top;
welding a paperboard sealing lid to the lip of the open top of the cup to seal the cup; and attaching a removable transport cap to the top of the cup covering the paperboard sealing lid to define a headspace chamber between the sealing lid and the transport cap for receipt and retainment of excess fluid exiting the cup.

Preferably, the sealing lid optionally comprises a pressure release aperture providing pressure regulation within the cup. Optionally, the pressure release aperture is a micron-sized pressure release aperture.

Preferably, the removable transport cap is configured for sealing engagement with the top of the cup and has a top panel and a skirt circumscribing the top panel, in which the top panel includes a first annular sealing head configured to abut the paperboard sealing lid (5) when the transport cap is engaged on the top of the cup.

In one example, the paperboard sealing lid is heat welded to the lip of the cup

In one example, the method includes a step of attaching a transport cap according to the invention to the cup on top of the paperboard sealing lid.

In another embodiment, the invention also extends to a method of providing a sealed container containing a beverage, the method comprising the steps of:
providing a cup with an open top and a lip circumscribing the open top;
dispensing a beverage into the cup;
welding a sealing lid to the lip of the cup continuously around the lip to seal the cup; and attaching a removable transport cap to the top of the cup covering the sealing lid to define a headspace chamber between the sealing lid and the transport cap for receipt and retainment of fluid exiting the cup. characterised in that the beverage is a pressurised beverage, the cup is a paperboard cup and the sealing lid is a paperboard sealing lid including a pressure release aperture. Preferably, the removable transport cap is configured for sealing engagement with the top of the cup and has a top panel and a skirt circumscribing the top panel, in which the top panel includes a first annular sealing head configured to abut the paperboard sealing lid when the transport cap is engaged on the top of the cup.

In an example not according to the invention the disclosure describes a welding machine for welding a lid to a cup containing a beverage to seal the beverage in the cup, the welding machine comprising a housing having:
a cup holder having an annual sealing head defining an aperture for receipt of a cup and configured for nested engagement with a lip of the cup when the cup is placed in the cup holder; and
a welding head configured for movement between a first position in which the welding head is spaced apart from the sealing head and a welding position in which the welding head abuts the annular sealing head,
wherein the cup holder comprises guide means for guiding the correct placement of the lid onto the lip of the cup.

In one example, the guide means comprises a plurality of guide arms disposed around the welding head. In one embodiment, guide means comprises at least 3 guide arms, for example 3, 4, 5, or 6.

In one example, each guide arm has a lower part that is substantially vertical and an upper part that outwardly angled.

In one example, the cup holder is configured for horizontal movement between a welding position in which the cup holder is positioned within the housing and the welding head is positioned above the annular sealing head, and a cup mounting position in which the cup holder is presented outside of the housing.

In a further example not according to the invention the disclosure describes a method of providing a sealed container containing a beverage, the method comprising the steps of:
providing a paperboard cup with an open top and a lip circumscribing the open top;
dispensing a beverage into the cup;
welding a paperboard sealing lid to the lip of the cup continuously around the lip to seal the paperboard cup; and
optionally, attaching a removable transport cap to the top of the cup covering the paperboard sealing lid.

In one variation of this example, the removable transport cap is configured for sealing engagement with the top of the cup and has a top panel and a skirt circumscribing the top panel, in which the top panel includes a first annular sealing head configured to abut the paperboard sealing lid when the plastic cap is engaged on the top of the cup. Typically, the beverage is a carbonated beverage.

Other aspects and preferred embodiments of the invention are defined and described in the claims set out below.

### Brief Description of the Figures

**Figure 1** is a perspective view of a container for carbonated beverages according to an a embodiment of the invention;
**Figure 2** is an exploded view of the container of Figure 1
**Figure 3** is a top view of the transportation cap;
**Figure 4** is a side elevational view of the transportation cap;
**Figure 5** is a perspective view of the transportation cap;
**Figure 6** is a sectional side view of the transportation cap taken along the lines III-III of **Figure 3****;**
**Figure 7** is a side elevational view of the container of **Figure 1** with a transportation cap mounted on the cup;
**Figure 8A** is a sectional side view of the container taken of **Figure 7****,** and **Figure 8B** is a detail of **Figure 8A****;**
**Figure 9** is a sectional side view of part of the cup and paperboard sealing lid of Figure 1;
**Figure 10** is a partly sectional elevational view of the container of the invention in use with a straw;
**Figure 11A** and **Figure 11B** are sectional view of the container and lid of Figure 7 showing how pressurised carbon dioxide within the cup can escape through the pressure release aperture in the paperboard sealing lid into the headspace between the sealing lid and the transport cap (Fig. 11A), and showing how any beverage that escapes through the pressure release aperture is maintained between the cap and the lid by the annular sealing head (Fig. 11B)
**Figure 12** is an illustration of a method of packaging a carbonate beverage suitable for the ready-to-drink/home delivery market.
**Figure 13** is a perspective view of a welding machine, showing a paperboard cup containing a beverage placed in the cup holder and a paperboard lid positioned above the top of the cup above the guide arms.
**Figure 14** is a perspective view of a welding machine of Figure 13, showing the cup holder without the cup in place.
**Figure 15** is top plan view of part of the cup holder showing the sealing head and guide arms.
**Figure 16** is a front elevational view of a cup being filled with a beverage in a beverage filling machine.
**Figure 17** is a front plan view of a welding machine.
**Figure 18** is a side elevational view the welding machine of Figure 17 (with a side wall of the housing removed) showing the cup holder projecting out of the housing and a cup nested in the cup holder and a cap positioned above the lip of the cup.
**Figure 19** is the same side elevational view as Figure 18 with the cup holder retracted into the housing and the welding head lowered into the welding position.
**Figure 20A** is a top plan view of the cup holder in an extended position prior to loading a cup.
**Figure 20B** is the same view of the cup holder as Figure 20A shown with a cup containing a beverage nested in the cup holder, and a lid.
**Figure 20C** is the same view of the cup holder as Figure 20B shown with the lid in position on the top of the cup.

### Detailed Description of the Invention

### Definitions and general preferences

Where used herein and unless specifically indicated otherwise, the following terms are intended to have the following meanings in addition to any broader (or narrower) meanings the terms might enjoy in the art:
Unless otherwise required by context, the use herein of the singular is to be read to include the plural and *vice versa.* The term "a" or "an" used in relation to an entity is to be read to refer to one or more of that entity. As such, the terms "a" (or "an"), "one or more," and "at least one" are used interchangeably herein.

As used herein, the term "comprise," or variations thereof such as "comprises" or "comprising," are to be read to indicate the inclusion of any recited integer (e.g. a feature, element, characteristic, property, method/process step or limitation) or group of integers (e.g. features, element, characteristics, properties, method/process steps or limitations) but not the exclusion of any other integer or group of integers. Thus, as used herein the term "comprising" is inclusive or open-ended and does not exclude additional, unrecited integers or method/process steps.

As used herein, the term "carbonated beverage" refers to carbonated drinks like cola, orange, lemonade, lemon and lime, water, and other "fizzy drinks". However, it will be appreciated that the container and methods of the invention may be employed with other pressurised drinks, such as beer, cider, sparkling water and sparkling wine. In one embodiment, the beverage is a "ready to consume" beverage, especially a "short shelf life" beverage.

As used herein, the term "micron-sized pressure release aperture" refers to an aperture that is sufficiently small to keep liquid within the cup when the cup is shaken or falls over, yet allow a sufficient amount of pressure dissipate out of the cup to prevent rupturing of the lid during period of pressure build-up. Generally, an aperture having an area of about 0.05 to about 0.8 mm² are suitable for this purpose, although this depends on the viscosity of the beverage. In a preferred embodiment, the aperture has an area of about 0.1 to 0.6 mm², more preferably about 0.2 to about 0.4 mm².

As used herein, the term "paperboard" as applied to paperboard cups and paperboard sealing lids refers to paperboard materials conventionally used in carbonated beverage cups, including paperboard-polymer laminates and paperboard-foil laminates. In a preferred embodiment, the paperboard laminate is a paperboard-polymer laminate, as these have been found to provide the best seal when adhered together by welding, generally heat welding. These paperboard polymer laminates generally include a layer of paperboard with a barrier layer of polymer, generally a polyethylene polymer, on one or both sides of the paper. Specific examples of paperboard laminates for use in containers of the invention include Stora Enso's Cupforma paperboard, Georgia Pacific's CPH Masterserve cupstock,, Mondi Paper Miprotex Barrier Stock. Paperboard formed from any type of paper pulp may be employed, including conventional paperpulp from trees, or paperpulp from bamboo or bagasse.

As used herein, the term "adhered" as applied to the sealing lids and cups refers to the sealing of the lid to the lip of the cup. Various methods of sealing may be employed, for example by means of welding (i.e. induction, heat and ultrasound welding methodologies). Heat welding has been found to provide the most efficient seal between a paperboard sealing lid and paperboard cup, capable of resisting significant pressure build-up in the cup during transport and storage, while providing a material that can be easily ruptured with a straw to allow the beverage be consumed.

As used herein, the term "heat welded" (also referred to as "heat-fused") refers to a process where the lip is welded to the lip of the cup using heat. Methods of heat welding paperboard laminate materials together are well known to those skilled in the art, and machines for this purpose are commercially available. Welding of the lid to the lip on the cup is facilitated by providing a lip with a flattened upper surface, which increases the surface area of the lip available for welding to the lid.

### Exemplification

The invention will now be described with reference to specific Examples. These are merely exemplary and for illustrative purposes only: they are not intended to be limiting in any way to the scope of the monopoly claimed or to the invention described. These examples constitute the best mode currently contemplated for practicing the invention.

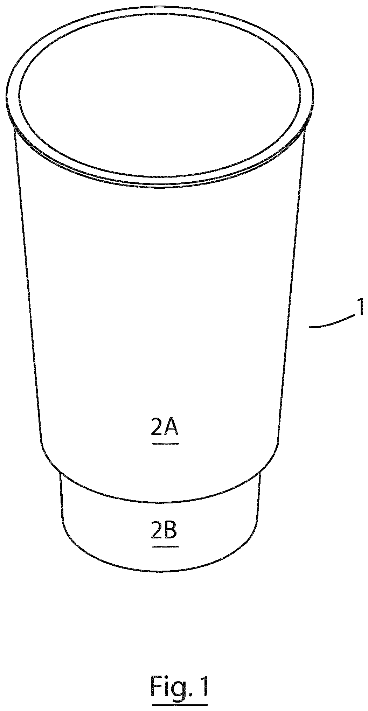

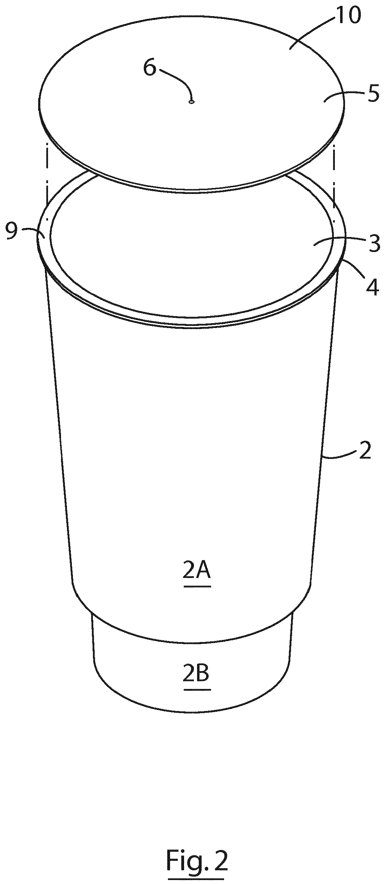

Referring to the drawings, and initially to Figures 1 and 2, there is illustrated a container for a carbonated beverage according to the invention, indicated generally by the reference numeral 1. The container comprises a paperboard laminate cup 2 (hereafter "cup") having an open top 3 circumscribed by a lip 4 (Fig. 1), and a paperboard laminate sealing lid 5 that is heat-welded to the lip to seal the cup 2 (Fig. 2). The paperboard laminate sealing lid 5 (hereafter "sealing lid" has a single micron-sized pressure release aperture 6 disposed in the centre of the lid having a diameter of approximately 0.6 mm.

In more detail, the sealing lid and cup are formed from the same paperboard-polyethylene laminate material, specifically PE coated Paper Cup Stock. Other paperboard-polymer laminates that may be employed include Biodegradable PLA Coated Paper Cup Stock. The cup is generally frusto-connical in shape, has a volume of approximately 450 mls (16 oz), and has an upper section 2A that is double walled and a lower section 2B that is single walled. The lip 4 at the top of the cup extends laterally outwardly of the top of the cup and a top of the lip is flattened to provide an annular landing surface 9 having a width of about 5 mm to which a periphery 10 of the paperboard sealing lid 5 is heat welded.

In use, a carbonated beverage is dispensed into the cup from a drink dispenser to a pre-set volume, and the cup containing the beverage is placed in a heat-welding machine, where a sealing lid is welded to the annular surface of the lip of the cup. This provides a very strong seal that is capable of withstanding pressures in the cup of up to 3 Bar. In addition, the provision of the micron-sized aperture in the sealing lid allows a certain amount of pressure to be vented from the cup during periods of pressure build-up, for example during transport, which helps prevent rupturing of the seal.

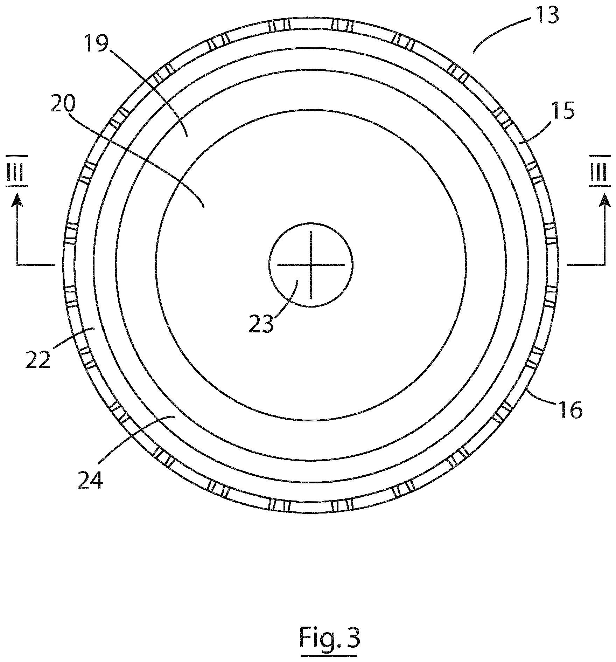

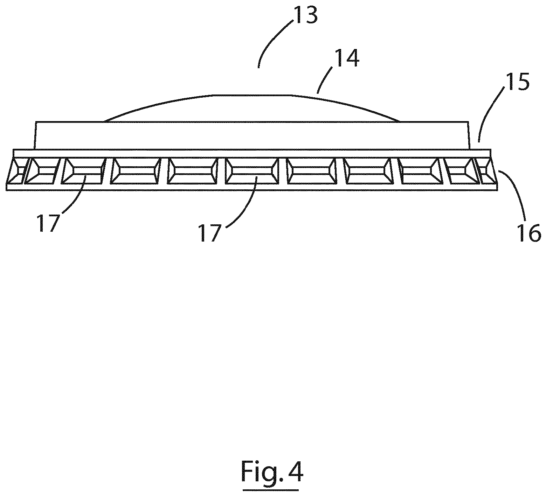

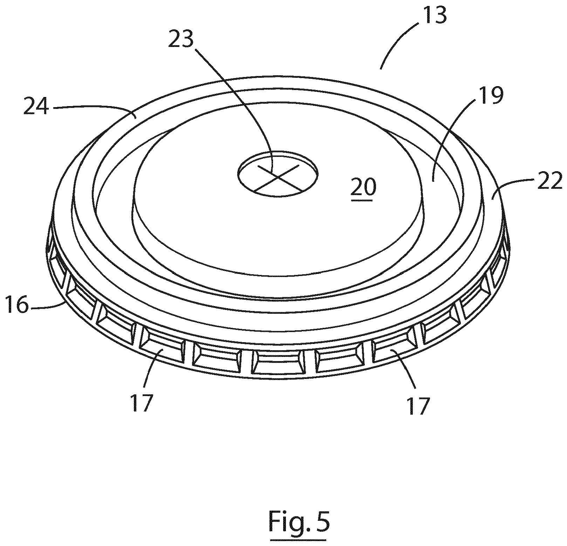

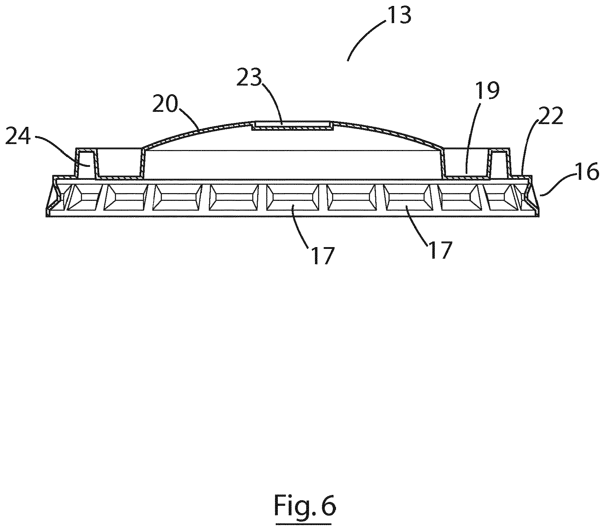

Referring to Figs 3 to 6, there is illustrated a transport cap suitable for use with a sealed container of the invention and indicated generally by the reference numeral 13. As shall be explained more fully below, the transport cap 13 is a removable transport cap 13 for sealing engagement with the top of the cup 2 and is configured to define a headspace chamber 25 between the sealing lid 5 and the transport cap 13 for receipt and retainment of fluid exiting the cup 2. The transport cap 13 is generally made from a polymer material such as PET (Polyethylene) or PS (Polystyrene), is opaque or coloured, and comprises a top panel 14 and a skirt 16 that extends downwardly from a periphery 15 of the top panel 14. The skirt comprises a series of fluted formations 17 which are conventional in friction fit lids for papers cups. The top panel 14 comprises a recessed annular sealing head 19 which defines a convex central part 20, and a second annular sealing head 22 at the periphery 15 of the top panel 14. A raised annular channel 24 is defined between the annular sealing heads 19 and 22. The convex central part 20 comprises a re-closable aperture 23 configured for receipt of a drinking straw.

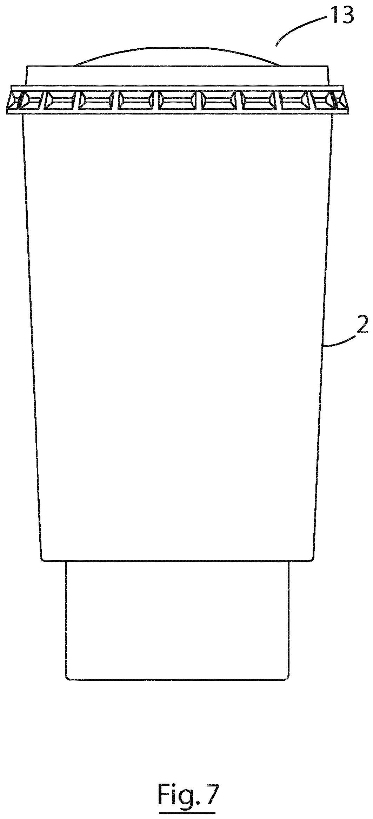

Figure 7 is a side elevational view of the transport cap 13 engaged with the cup 2 and sealing lid 5.

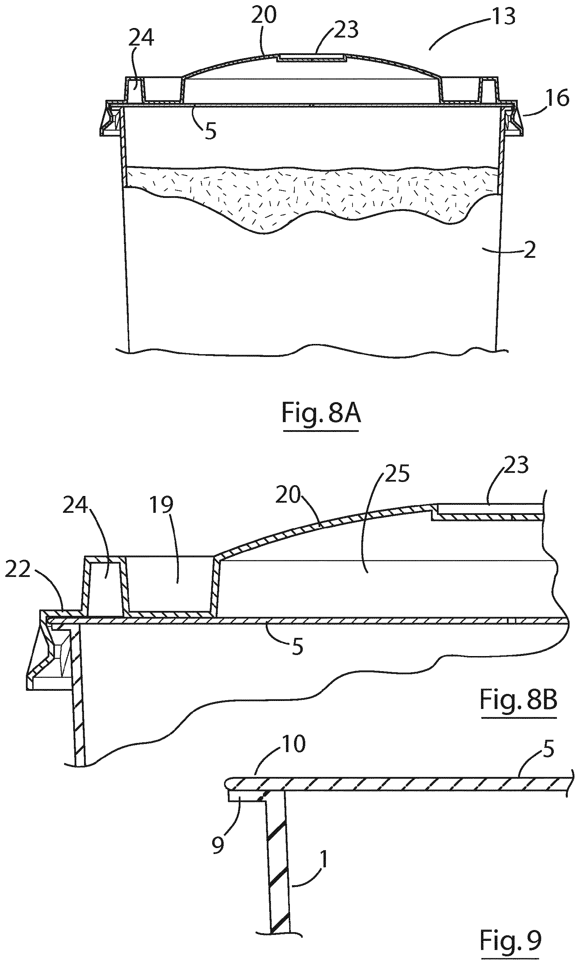

Figures 8A and 8B are sectional views of the sealed container comprising cup 3, sealing lid 5 and transport cap 13 in an engaged configuration, which shows how the recessed annular sealing head 19 of the transport cap 13 is configured to abut and seal against the sealing lid 5, and peripherally define or form the headspace 25 defined between the sealing lid 5 and central convex part 20 of the transport cap 13. This illustration also shows how the second annular sealing head 22 is configured to abut and seal against the periphery 10 of the sealing lid 5 which is heat-welded to the annular surface 9 of the lip 4. Also shown is the raised annular channel 24 defined between the sealing heads 19 and 22 which serves as a channel to collect any beverage which escapes beyond the sealing head 19 and prevent escape of the beverage. Figure 9 is a detailed view showing how the sealing lid 5 is welded to the annular surface 9 on the lip 4 of the cup 2.

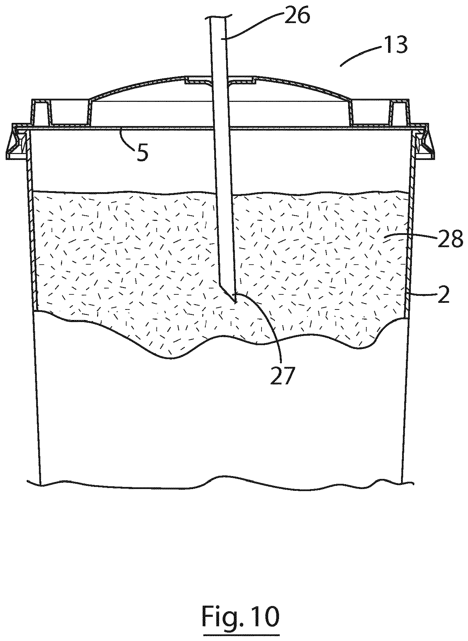

Figure 10 illustrates the use of the carbonated beverage container of the invention, where a straw 26 with a piercing tip 27 is inserted through the re-closable aperture 23, and through the sealing lid 5, and into the beverage 28 contained within the container.

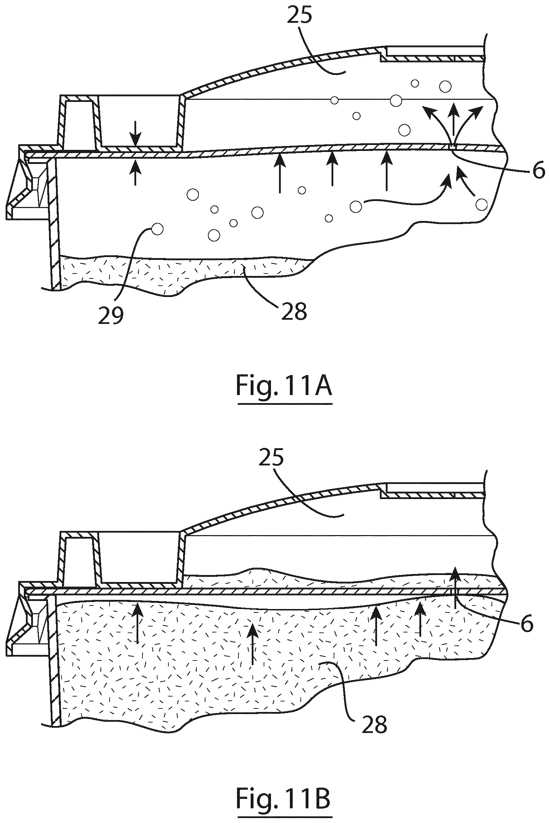

Figure 11A and 11B are sectional views of the sealed container of Figure 7 showing how pressurised carbon dioxide 29 within the cup forces the sealing lid 5 upwards against the sealing heads 18 and 22, and how gas can escape through the pressure release aperture 6 in the sealing lid into the headspace 25 between the sealing lid and the transport cap (Fig. 11A). Figure 11B shows how beverage 28 that escapes through the pressure release aperture 6 is maintained between the sealing lid and the transport cap by the annular sealing head 19.

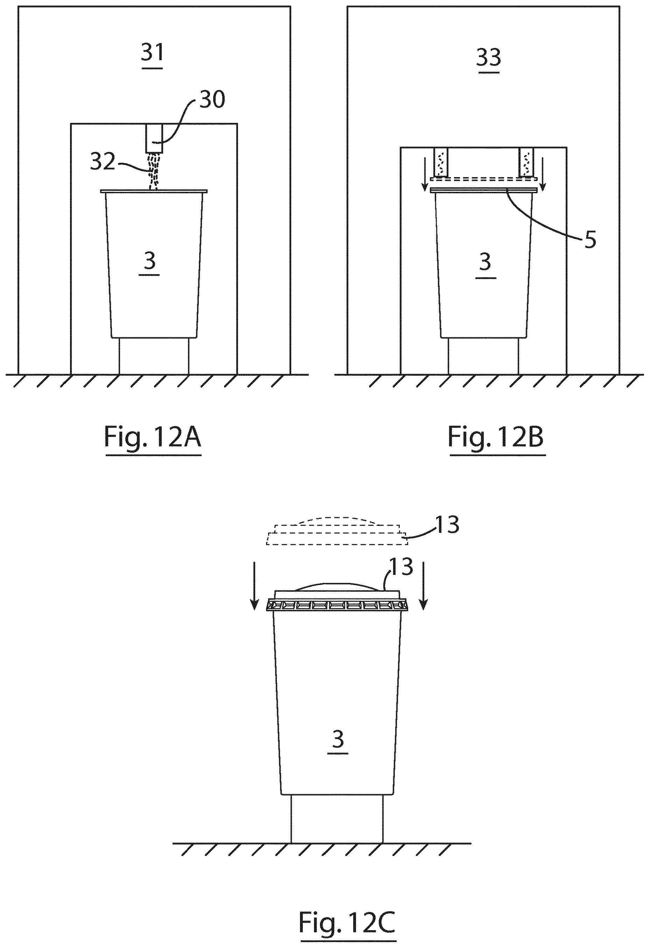

Figure 12 illustrates a method of packaging a carbonate beverage suitable for transport. In a first step (Fig. 12A), a cup 3 is placed under the spout 30 of a carbonated beverage dispenser 31 of the type employed in fast-food outlets, and the dispenser is actuated to fill the cup with carbonated beverage 32 to a pre-set volume. The cup 3 containing the desired amount of carbonated beverage 32 is then moved to the welding machine 33 (Fig. 12B), where a welding head of the welding machine heat-welds a paper-PE laminate sealing lid 5 to the top of the cup, sealing the cup. A transport cap 13 is then placed on the top of the sealed cup and secured in place. The packaged beverage is then ready for transport.

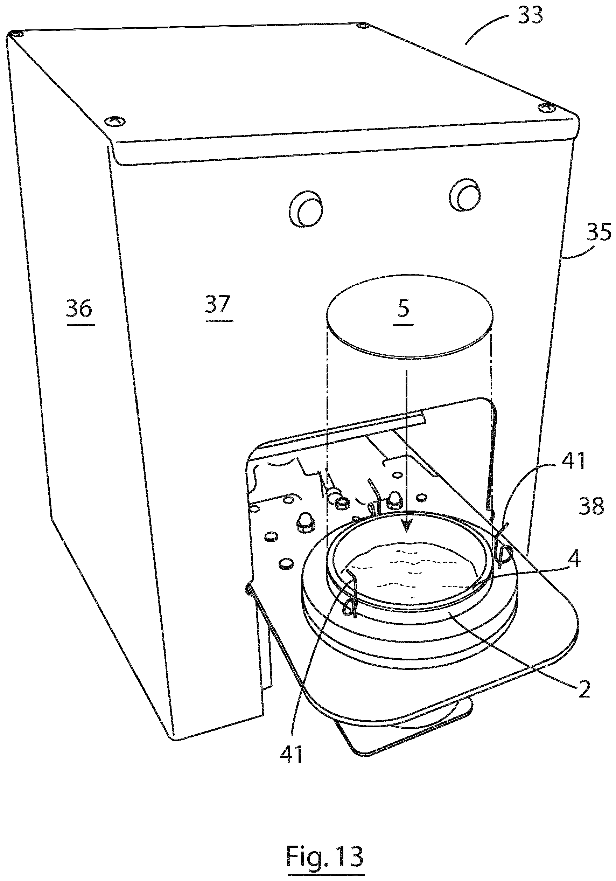

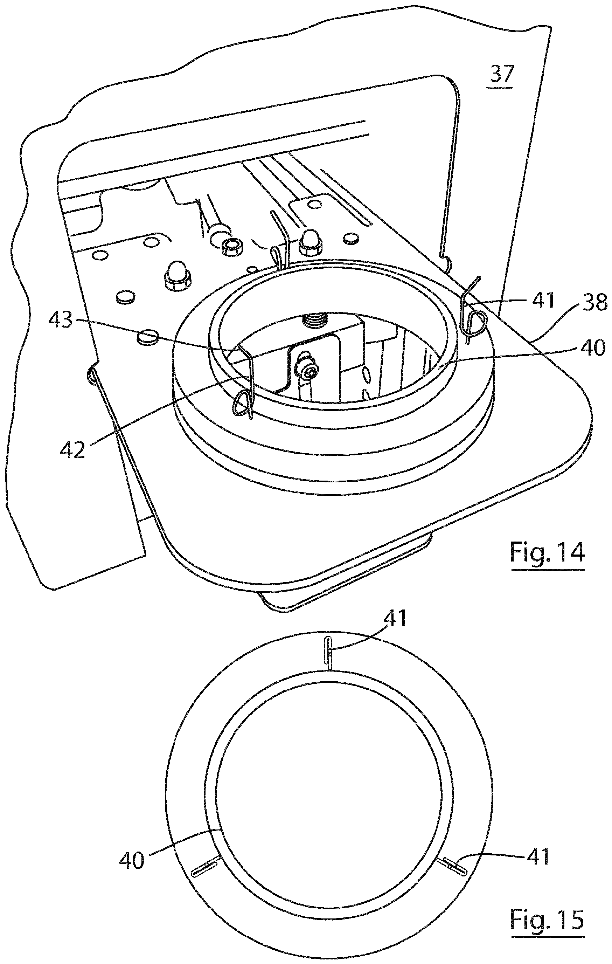

Figure 13 to 20 illustrate a welding machine and a use of the machine to seal a lid to a beverage cup. Referring to Figures 13-15, the welding machine 33 comprises a housing 35 comprising side walls 36 and a front wall 37 with an opening containing a cup holder tray 38 that is horizontally adjustable between a retracted and an extended position, cup-loading, position shown in Figure 13.Referring to Figure 14, the cup holder tray 38 comprises an annular sealing head 40 defining an aperture for receipt of a paper cup 2 which is dimensioned such that when a cup is nested in the cup holder (Fig. 13), a lip 4 of the cup 2 rests on the annular sealing head 40. The cup holder tray 38 additionally includes guide means for guiding a sealing lid 5 into position on the lip 4 of the cup 2. The guide means comprises three guide arms 41 positioned on the cup holder tray 38 equally spaced around the sealing head 40. Each guide arm comprises a lower part 42 that is substantially horizontal and an upper part 43 that is angled outwardly, whereby the combined action of the lower parts of the three guide arms acts to centre the lid directly above the annular sealing head 40. The welding machine 33 also includes a welding head (not shown) that is disposed in the machine above the cup holder tray 38 when it is in a retracted position, and vertically adjustable from a raised (resting) position to a lowered (welding) position.

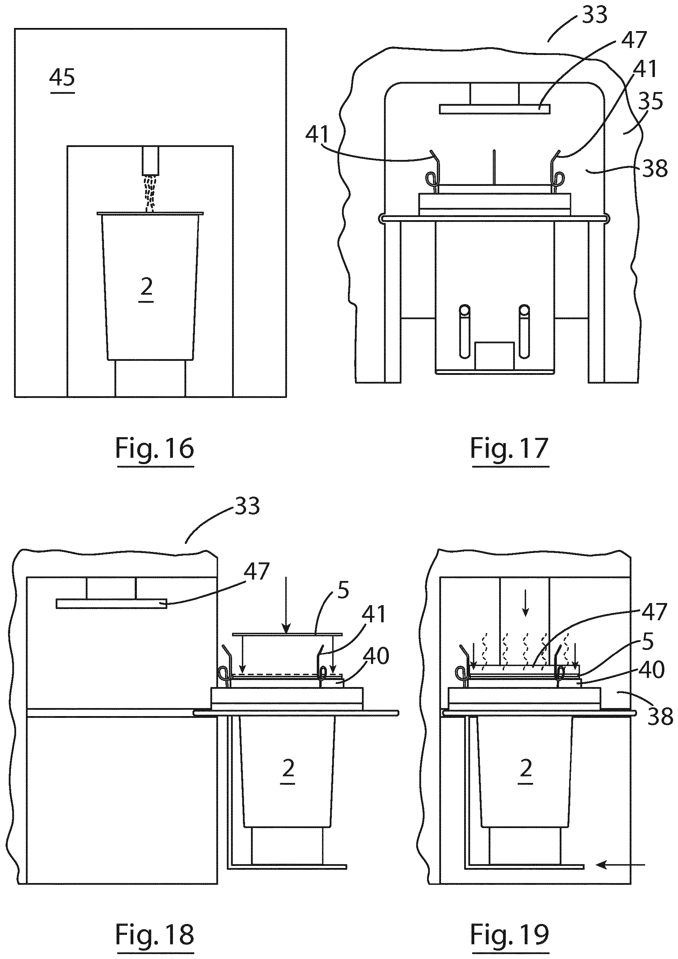

Referring to Figures 16 to 19, the use of the welding machine to heat-weld a paperboard sealing lid 5 to a paperboard cup 2 is described, in which parts identified with reference to the previous embodiments are assigned the same reference numerals.

Figure 16 illustrates the cup 5 being filled with carbonated beverage by a drinks filling machine 45.

Figure 17 illustrates the welding machine 33 with the cup holder tray 38 in a retracted position inside the housing 35 and the welding head 47 in a raised, resting, position.

Figure 18 illustrates the welding machine 33 with the cup holder tray 38 in an extended position outside of the housing 35, and a cup 5 nested in the cup holder tray 38 and a sealing lid 5 positioned above the cup and guide arms 41 and about to be dropped on to the top of the cup where the guide arms serve to correctly position the sealing lid on the lip of the cup as described previously.

Figure 19 illustrates a heat-welding step, showing the cup holder tray 38 in a retracted position within the housing, under the welding head which is 47 is a lowered into a welding position, abutting the annular sealing head 40 and heat-welding the paperboard lid 5 to the lip 4 of the paperboard cup 2.

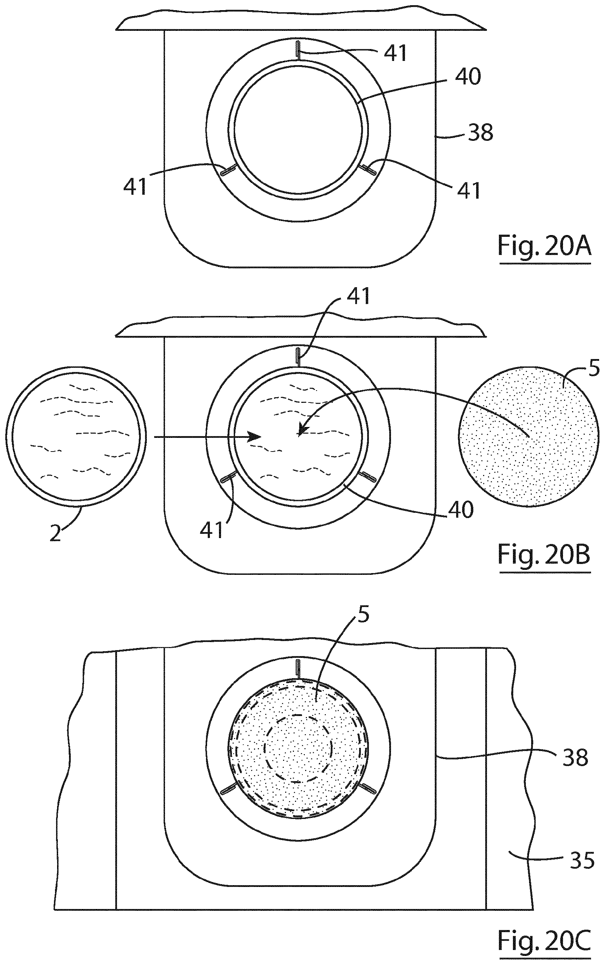

Figures 20A to 20C are plan views of the cup holder tray 38 in an extended position outside of the housing, prior to loading of the cup (Fig. 20A), after loading of the paper cup 2 (Fig. 20B) and showing the sealing lid 5 about to be placed on the cup 2 guided by the guide arms (not shown), and after the paper cup 5 has been guided onto the lip 4 of the cup 2 and the tray has been retracted into the housing 35 (Fig. 20C).

### Example 1

473ml (16oz) cups formed of a paperboard-PE laminate material were filled with carbonated beverage and a paperboard-PE laminate sealing lid was heat-sealed to the lip of the cup using a table top, single cavity cup heat sealing semi-automatic machine. A transport cap was then placed on the top of the cup and secured in place. The cup was then dropped 1,22 meter (4 feet) onto a concrete surface without any loss of integrity in the heat weld between the cup and the lid, and without any spillage of beverage.

### Example 2

The same containers as employed in Example 1 were subjected to a pressure test. The first container contained a micron-sized aperture (0.60 +/- 0.02 mm) in the centre of the paperboard laminate sealing lid 5, and the second container did not contain an aperture in the sealing lid. Steadily increasing pressure was applied to both containers. The seal in the first container remained intact up to a pressure of 0,19 +/- 0.014 bar (2.8 +/- 0.2 psi) whereupon the application of further pressure failed to register pressure increases in the container, indicating that the pressure was being vented through the micron-sized aperture at elevated pressure levels, preventing loss of integrity in the seal. The seal in the first container remained intact up to a pressure of 0,21 +/- 0.014 bar (3.0 +/- 0.2 psi) and pressure beyond this value caused the sealed rim of the container to fail. This demonstrates that the pressure release aperture functions to vent gas from the cup at elevated pressure, preventing the pressure rising to a level that causes a loss of integrity in the seal.

## Claims

1. A kit for assembling a sealed container containing a beverage, the kit comprising:
a cup (2) with an open top (3) and a lip (4) circumscribing the open top;
a sealing lid (5) dimensioned to be welded to the lip of the cup continuously around the lip to seal the cup; a removable transport cap (13) for sealing engagement with the top of the cup (2) configured to define a headspace chamber (25) between the sealing lid (5) and the transport cap (13) for receipt and retainment of fluid exiting the cup (2) and a welding machine (33) comprising a welding head configured for sealing the paperboard sealing lid to the lip of the cup,
**characterised in that** the beverage is a pressurised beverage, the cup (2) is a paperboard cup (2) and the sealing lid (5) is a paperboard sealing lid (5) including a pressure release aperture (6) wherein in use a beverage can be dispensed into the cup, and the welding machine can be actuated whereby the welding head can weld the paperboard sealing lid to the lip of the cup continuously around the lip to provide the sealed container containing the beverage.

2. A kit as claimed in Claim 1 , in which the pressure release aperture has an area of about 0.1 mm² to about 10 mm².

3. A kit as claimed in Claim 1, in which the pressure release aperture (6) is a micron-sized pressure release aperture (6) having an area of about 0.05 mm² to about 0.8 mm².

4. A kit according to any preceding Claim, in which the transport cap (13) comprises a top panel (14) having a raised central portion (20) and the headspace chamber (25) is defined between the sealing lid (5) and the raised central portion (20).

5. A kit according to Claim 4, in which the top panel (14) includes a first annular sealing head (19) configured to abut the paperboard sealing lid (5) when the transport cap (13) is engaged on the top of the cup to peripherally define the headspace chamber (25).

6. A sealed container containing a beverage, the sealed container comprising:
a cup (2) with an open top (3) and a lip (4) circumscribing the open top;
a beverage (32) disposed within the cup;
a sealing lid (5) welded to the lip of the cup continuously around the lip to seal the cup; and
a removable transport cap (13) for sealing engagement with the top of the cup (2) configured to define a headspace chamber (25) between the sealing lid (5) and the transport cap (13) for receipt and retainment of fluid exiting the cup (2) **characterised in that** the beverage is a pressurised beverage, the cup (2) is a paperboard cup (2) and the sealing lid (5) is a paperboard sealing lid (5) including a pressure release aperture (6).

7. A sealed container as claimed in Claim 6, in which the pressure release aperture (6) has an area of about 0.1 mm² to about 10 mm².

8. A sealed container as claimed in Claim 6 , in which the pressure release aperture (6) is a micron-sized pressure release aperture (6) having an area of about 0.05 mm² to about 0.8 mm².

9. A sealed container according to any of Claims 6 to 8, in which the transport cap (13) comprises a top panel (14) having a raised central portion (20) and the headspace chamber (25) is defined between the sealing lid (5) and the raised central portion (20) and, optionally, the top panel (14) includes a first annular sealing head (19) configured to abut the paperboard sealing lid (5) when the transport cap (13) is engaged on the top of the cup to peripherally define the headspace chamber (25).

10. A method of providing a sealed container containing a beverage, the method comprising the steps of:
providing a cup (2) with an open top (3) and a lip (4) circumscribing the open top;
dispensing a beverage (32) into the cup;
welding a sealing lid (5) to the lip of the cup continuously around the lip to seal the cup; and
attaching a removable transport cap (13) to the top of the cup (2) covering the sealing lid to define a headspace chamber (25) between the sealing lid (5) and the transport cap (13) for receipt and retainment of fluid exiting the cup (2) **characterised in that** the beverage is a pressurised beverage, the cup (2) is a paperboard cup (2) and the sealing lid (5) is a paperboard sealing lid (5) including a pressure release aperture (6).

## Patentansprüche

1. Ausrüstung zum Zusammensetzen eines ein Getränk enthaltenden dicht verschlossenen Behälters, wobei die Ausrüstung Folgendes umfasst:
einen Becher (2) mit offener Oberseite (3) und einer die offene Oberseite umschreibenden Lippe (4);
einen dicht schließenden Deckel (5), der dazu bemessen ist, durchgehend um die Lippe an die Lippe des Bechers geschweißt zu werden, um den Becher dicht zu verschließen; eine abnehmbare Transportkappe (13) für den dicht schließenden Eingriff mit der Oberseite des Bechers (2), die dazu konfiguriert ist, eine Luftraumkammer (25) zwischen dem dicht schließenden Deckel (5) und der Transportkappe (13) zum Aufnehmen und Halten von aus dem Becher (2) austretendem Fluid zu definieren, und eine Schweißmaschine (33) umfassend einen Schweißkopf, der zum dichten Schließen des dicht schließenden Pappdeckels an der Lippe des Bechers konfiguriert ist,
**dadurch gekennzeichnet, dass** es sich bei dem Getränk um ein unter Druck stehendes Getränk handelt, es sich bei dem Becher (2) um einen Pappbecher (2) handelt und es sich bei dem dicht schließenden Deckel (5) um einen dicht schließenden Pappdeckel (5) mit einer Druckentlastungsöffnung (6) handelt, wobei im Gebrauch ein Getränk in den Becher ausgegeben werden kann und die Schweißmaschine betätigt werden kann, wodurch der Schweißkopf den dicht schließenden Pappdeckel durchgehend um die Lippe an die Lippe des Bechers schweißen kann, um den das Getränk enthaltenden dicht verschlossenen Behälter bereitzustellen.

2. Ausrüstung nach Anspruch 1, wobei die Druckentlastungsöffnung eine Fläche von etwa 0, 1 mm² bis etwa 10 mm² aufweist.

3. Ausrüstung nach Anspruch 1, wobei es sich bei der Druckentlastungsöffnung (6) um eine Druckentlastungsöffnung (6) im Mikrometergrößenbereich handelt, die eine Fläche von etwa 0.05 mm² bis etwa 0.8 mm² aufweist.

4. Ausrüstung nach einem der vorangehenden Ansprüche, wobei die Transportkappe (13) ein Abdeckelement (14) mit einem erhöhten mittleren Abschnitt (20) umfasst und die Luftraumkammer (25) zwischen dem dicht schließenden Deckel (5) und dem erhöhten mittleren Abschnitt (20) definiert ist.

5. Ausrüstung nach Anspruch 4, wobei das Abdeckelement (14) einen ersten ringförmigen Dichtungskopf (19) umfasst, der dazu konfiguriert ist, an dem dicht schließenden Pappdeckel (5) anzuliegen, wenn sich die Transportkappe (13) auf der Oberseite des Bechers im Eingriff befindet, um die Luftraumkammer (25) umlaufend zu definieren.

6. Dicht verschlossener Behälter, der ein Getränk enthält, wobei der dicht verschlossene Behälter Folgendes umfasst:
einen Becher (2) mit offener Oberseite (3) und einer die offene Oberseite umschreibenden Lippe (4);
ein in dem Becher angeordnetes Getränk (32);
einen dicht schließenden Deckel (5), der durchgehend um die Lippe an die Lippe des Bechers geschweißt ist, um den Becher dicht zu verschließen; und
eine abnehmbare Transportkappe (13) für den dicht schließenden Eingriff mit der Oberseite des Bechers (2), die dazu konfiguriert ist, eine Luftraumkammer (25) zwischen dem dicht schließenden Deckel (5) und der Transportkappe (13) zum Aufnehmen und Halten von aus dem Becher (2) austretendem Fluid zu definieren, **dadurch gekennzeichnet, dass** es sich bei dem Getränk um ein unter Druck stehendes Getränk handelt, es sich bei dem Becher (2) um einen Pappbecher (2) handelt und es sich bei dem dicht schließenden Deckel (5) um einen dicht schließenden Pappdeckel (5) mit einer Druckentlastungsöffnung (6) handelt.

7. Dicht verschlossener Behälter nach Anspruch 6, wobei die Druckentlastungsöffnung (6) eine Fläche von etwa 0,1 mm² bis etwa 10 mm² aufweist.

8. Dicht verschlossener Behälter nach Anspruch 6, wobei es sich bei der Druckentlastungsöffnung (6) um eine Druckentlastungsöffnung (6) im Mikrometergrößenbereich handelt, die eine Fläche von etwa 0.05 mm² bis etwa 0.8 mm² aufweist.

9. Dicht verschlossener Behälter nach einem der Ansprüche 6 bis 8, wobei die Transportkappe (13) ein Abdeckelement (14) mit einem erhöhten mittleren Abschnitt (20) umfasst und die Luftraumkammer (25) zwischen dem dicht schließenden Deckel (5) und dem erhöhten mittleren Abschnitt (20) definiert ist, und optional das Abdeckelement (14) einen ersten ringförmigen Dichtungskopf (19) umfasst, der dazu konfiguriert ist, an dem dicht schließenden Pappdeckel (5) anzuliegen, wenn sich die Transportkappe (13) auf der Oberseite des Bechers im Eingriff befindet, um die Luftraumkammer (25) umlaufend zu definieren.

10. Verfahren zum Bereitstellen eines dicht verschlossenen Behälters, der ein Getränk enthält, wobei das Verfahren folgende Schritte umfasst:
Bereitstellen eines Bechers (2) mit offener Oberseite (3) und einer die offene Oberseite umschreibenden Lippe (4);
Ausgeben eines Getränks (32) in den Becher;
Schweißen eines dicht schließenden Deckel (5) durchgehend um die Lippe an die Lippe des Bechers, um den Becher dicht zu verschließen; und
Anbringen einer abnehmbaren Transportkappe (13) an der Oberseite des Bechers (2), die den dicht schließenden Deckel abdeckt, um eine Luftraumkammer (25) zwischen dem dicht schließenden Deckel (5) und der Transportkappe (13) zum Aufnehmen und Halten von aus dem Becher (2) austretendem Fluid zu definieren, **dadurch gekennzeichnet, dass** es sich bei dem Getränk um ein unter Druck stehendes Getränk handelt, es sich bei dem Becher (2) um einen Pappbecher (2) handelt und es sich bei dem dicht schließenden Deckel (5) um einen dicht schließenden Pappdeckel (5) mit einer Druckentlastungsöffnung (6) handelt.

## Revendications

1. Kit servant à assembler un récipient étanche contenant une boisson, le kit comportant :
un gobelet (2) avec une partie supérieure ouverte (3) et une lèvre (4) cernant la partie supérieure ouverte ;
un couvercle d'étanchéité (5) dimensionné pour être soudé au niveau de la lèvre du gobelet de manière continue autour de la lèvre pour sceller le gobelet ; un capuchon de transport amovible (13) destiné à des fins de mise en prise étanche avec la partie supérieure du gobelet (2) dont la configuration permet de définir une chambre d'espace libre (25) entre le couvercle d'étanchéité (5) et le capuchon de transport (13) à des fins de réception et de retenue de tout fluide sortant du gobelet (2) et une machine à souder (33) comportant une tête de soudage configurée pour sceller le couvercle d'étanchéité en carton sur la lèvre du gobelet, **caractérisé en ce que** la boisson est une boisson sous pression, le gobelet (2) est un gobelet en carton (2) et le couvercle d'étanchéité (5) est un couvercle d'étanchéité en carton (5) comprenant une ouverture de libération de pression (6), dans lequel lors de l'utilisation une boisson peut être distribuée jusque dans le gobelet, et la machine à souder peut être actionnée ce par quoi la tête de soudage peut souder le couvercle d'étanchéité en carton sur la lèvre du gobelet de manière continue autour de la lèvre pour fournir le récipient étanche contenant la boisson.

2. Kit selon la revendication 1, dans lequel l'ouverture de libération de pression a une superficie allant d'environ 0,1 mm² à environ 10 mm².

3. Kit selon la revendication 1, dans lequel l'ouverture de libération de pression (6) est une ouverture de libération de pression (6) de l'ordre du micromètre ayant une superficie allant d'environ 0,05 mm² à environ 0,8 mm².

4. Kit selon l'une quelconque des revendications précédentes, dans lequel le capuchon de transport (13) comporte un panneau supérieur (14) ayant une partie centrale surélevée (20) et la chambre d'espace libre (25) est définie entre le couvercle d'étanchéité (5) et la partie centrale surélevée (20).

5. Kit selon la revendication 4, dans lequel le panneau supérieur (14) comprend une première tête d'étanchéité annulaire (19) configurée pour venir prendre appui contre le couvercle d'étanchéité en carton (5) quand le capuchon de transport (13) est mis en prise sur la partie supérieure du gobelet pour définir de manière périphérique la chambre d'espace libre (25).

6. Récipient étanche contenant une boisson, le récipient étanche comportant :
un gobelet (2) avec une partie supérieure ouverte (3) et une lèvre (4) cernant la partie supérieure ouverte ;
une boisson (32) disposée dans le gobelet ;
un couvercle d'étanchéité (5) soudé au niveau de la lèvre du gobelet de manière continue autour de la lèvre pour sceller le gobelet ; et
un capuchon de transport amovible (13) destiné à des fins de mise en prise étanche avec la partie supérieure du gobelet (2) dont la configuration permet de définir une chambre d'espace libre (25) entre le couvercle d'étanchéité (5) et le capuchon de transport (13) à des fins de réception et de retenue de tout fluide sortant du gobelet (2) **caractérisé en ce que** la boisson est une boisson sous pression, le gobelet (2) est un gobelet en carton (2) et le couvercle d'étanchéité (5) est un couvercle d'étanchéité en carton (5) comprenant une ouverture de libération de pression (6).

7. Récipient étanche selon la revendication 6, dans lequel l'ouverture de libération de pression (6) a une superficie allant d'environ 0,1 mm² à environ 10 mm².

8. Récipient étanche selon la revendication 6, dans lequel l'ouverture de libération de pression (6) est une ouverture de libération de pression (6) de l'ordre du micromètre ayant une superficie allant d'environ 0,05 mm² à environ 0,8 mm².

9. Récipient étanche selon l'une quelconque des revendications 6 à 8, dans lequel le capuchon de transport (13) comporte un panneau supérieur (14) ayant une partie centrale surélevée (20) et la chambre d'espace libre (25) est définie entre le couvercle d'étanchéité (5) et la partie centrale surélevée (20) et, éventuellement, le panneau supérieur (14) comprend une première tête d'étanchéité annulaire (19) configurée pour venir prendre appui contre le couvercle d'étanchéité en carton (5) quand le capuchon de transport (13) est mis en prise sur la partie supérieure du gobelet pour définir de manière périphérique la chambre d'espace libre (25).

10. Procédé servant à fournir un récipient étanche contenant une boisson, le procédé comportant les étapes consistant à :
fournir un gobelet (2) avec une partie supérieure ouverte (3) et une lèvre (4) cernant la partie supérieure ouverte ;
distribuer une boisson (32) dans le gobelet ;
souder un couvercle d'étanchéité (5) au niveau de la lèvre du gobelet de manière continue autour de la lèvre pour sceller le gobelet ; et
attacher un capuchon de transport amovible (13) sur la partie supérieure du gobelet (2) recouvrant le couvercle d'étanchéité pour définir une chambre d'espace libre (25) entre le couvercle d'étanchéité (5) et le capuchon de transport (13) à des fins de réception et de retenue de tout fluide sortant du gobelet (2) **caractérisé en ce que** la boisson est une boisson sous pression, le gobelet (2) est un gobelet en carton (2) et le couvercle d'étanchéité (5) est un couvercle d'étanchéité en carton (5) comprenant une ouverture de libération de pression (6).
